# EUROPÄISCHE PATENTSCHRIFT

(11) **EP 2 932 221 B1**
(45) Veröffentlichungstag und Bekanntmachung des Hinweises auf die Patenterteilung: **30.08.2017**
(21) Anmeldenummer: 13836226.4
(22) Anmeldetag: 13.12.2013
(51) Int. Cl.: G01L 9/06, G01L 19/00, G01M 3/32

(54) **VERFAHREN ZUR DICHTEPRÜFUNG EINES GEHÄUSES**
METHOD FOR TESTING THE LEAK TIGHTNESS OF A HOUSING
PROCÉDÉ DE TEST D'ÉTANCHÉITÉ D'UN BOÎTIER

(30) Priorität: 13.12.2012 DE 102012024346; 10.12.2013 DE 102013020388
(43) Veröffentlichungstag der Anmeldung: 21.10.2015
(73) Patentinhaber: Tesat-Spacecom GmbH & Co. KG, 71522 Backnang (DE)
(72) Erfinder: KONRATH, Willibald, 71554 Cottenweiler (DE); SCHMITT, Reinhold, 71546 Aspach (DE); SCHOLL, Klaus, 71384 Weinstadt (DE); SCHMELCHER, Haiko, 74427 Fichtenberg (DE)
(74) Vertreter: Lorenz & Kopf PartG mbB Patentanwälte, LKGLOBAL
(86) Internationale Anmeldenummer: PCT/DE2013/000777
(87) Internationale Veröffentlichungsnummer: WO 2014/090220

(56) Entgegenhaltungen:
- WO-A1-2012/081537
- DE-A1- 4 102 923
- DE-C1- 4 335 838
- US-A- 5 214 957
- US-A1- 2007 056 638
- US-A1- 2011 153 232
- US-B1- 8 201 438
- Don Tuite: "Constant-Current Source Source Simplifies Sensor Driving Electronic Design", Electronic Design, 8. Dezember 2009 (2009-12-08), XP055121418, Gefunden im Internet: URL:http://electronicdesign.com/archive/co nstant-current-source-source-simplifies-se nsor-driving [gefunden am 2014-06-03]

## Beschreibung

Die vorliegende Erfindung betrifft Messtechnik. Insbesondere betrifft die vorliegende Erfindung eine Messanordnung zur Ermittlung einer Leckagerate eines Gehäuses zur Aufnahme eines Gerätes für Satelliten und Weltraumanwendungen. Weiterhin betrifft die Erfindung ein Verfahren zum Ermitteln einer Leckagerate eines Gases in einem Gehäuse zur Aufnahme eines elektrischen Gerätes zur Verwendung im Weltraum.

In besonderen Applikationsszenarien, wie beispielsweise in einer Überdruck-, Unterdruck- oder Vakuumapplikation, werden elektronische Baugruppen in einem Gehäuse angeordnet, welches über geeignete elektrische Verbindungen die im Gehäuse angeordneten Bauelemente nach außen konnektiert. Das Gehäuse selbst ist dabei dicht, insbesondere hermetisch dicht, ausgestaltet, so dass aufgrund äußerer veränderlicher Druckgegebenheiten der Druck im Gehäuse im Wesentlichen gleich bleibt und eine dort vorgesehene Gaszusammensetzung sich im Wesentlichen nicht ändert.

Hermetisch dichte Gehäuse werden bei der Herstellung bezüglich ihrer Dichtheit überprüft, um sicherzustellen, dass, insbesondere solange Produkte noch nicht an ihrem Anwendungsort angekommen sind, beispielsweise bei einer Satellitenapplikation im Orbit, somit im Vakuum sind, keine Feuchtigkeit eindringen kann. Geeignete Testverfahren finden sich dabei in den Standards für Hybride MIL-STD-883J, METHOD 1014.14 oder Bauelemente MIL-STD-750F, METHOD 1071. Gebräuchlich sind Verfahren mit einem Tracer-Gas. Beispielsweise können Helium-Lecktests bzw. "GALDEN-Bombing"-Verfahren zur Messung von Grob- und Feinleckagen sowie zur Suche von Grobleckagen durchgeführt werden. Diese Verfahren wurden jedoch hauptsächlich für den Test von kleinen Bauelementen entwickelt und weisen bereits ein signifikantes Alter auf.

Bei den zuvor genannten Testverfahren wird meist eine Helium-Leckrate ermittelt, die nur im rechnerischen Bezug mit einer tatsächlichen, spezifizierten, äquivalenten Luft-Leckrate steht. Zudem kann bei sehr kleinen Lecks das sogenannte "Helium-Bombing" vergleichsweise lange Bombingzeiten erforderlich machen.

Hochintegrierte Bauelementgruppen mit komplexer Umgebungselektronik außerhalb der hermetisch dichten Kammer sind möglicherweise nur unter erschwerten Bedingungen mit bekannten Lecktestverfahren testbar.

So kann eine hermetisch dichte Kammer für eine Dichteprüfung nicht immer physikalisch vom Rest eines Moduls, somit von seiner Umgebungselektronik außerhalb der Kammer, getrennt werden. An der Umgebungselektronik, mechanischen Teilen, Glasfasern, Koaxialsteckern oder Hohlräumen anhaftendes oder eingelagertes Helium mag auch keine Messung einer Heliumleckrate zulassen bzw. diese zumindest verkomplizieren. Somit mag ein gesicherter Rückschluss auf eine ordnungsgemäße Hermetizität nicht immer möglich sein.

Bekannte Testgeräte, die zur Durchführung der zuvor genannten Tests geeignet sind, mögen jedoch aufgrund der zuvor beschriebenen Ausrichtung der Testverfahren auf kleine Bauelemente möglicherweise nicht geeignet sein, größere Bauelemente bzw. Gehäuse, wie sie z.B. in einer Satellitenapplikation verwendet werden, testen zu können.

Eine Gehäusekomponente kann beispielsweise mithilfe eines geeigneten Verbindungsverfahrens, wie beispielsweise einem Schweißverfahren, insbesondere Laserschweißen, hermetisch verschlossen werden. Möglicherweise kann jedoch eine Verzugszeit zwischen dem Schweißvorgang und einem geforderten Helium-Lecktest nicht eingehalten werden, weil vorher auf die Verflüchtigung von eingelagertem oder anhaftendem Helium gewartet werden muss.

Bei einer zu großen Verzugszeit wiederum zwischen Entnahme aus der Schweißkammer und dem Lecktest kann bereits alles Helium aus der hermetisch dichten Kammer durch ein Leck entwichen sein, so dass ein Lecktest effektiv nicht mehr durchführbar ist. Möglicherweise kann daher mit den herkömmlichen Verfahren nicht mehr zwischen einem absolut dichten und einem grob undichten Gehäuse unterschieden werden.

GALDEN ist als Medium zur Identifikation von Grobleckagen aufgrund möglicher Kontamination und unerwünschtem Eindringen in Teile außerhalb der hermetisch dichten Kammer meist nicht anwendbar. Eine weitere Test-Möglichkeit wäre zwar eine optische Inspektion zum Auffinden von groben Lecks, was jedoch ein relativ unsicheres Verfahren darstellt.

Eine weitere Überprüfungsmöglichkeit von Druckgefäßen ist die Verwendung eines Druckanschlusses sowie Beaufschlagung einer Druckerhöhung bzw. eines Druckabfalls im Gehäuse mittels des Druckanschlusses, welcher gleichfalls extern über den Druckanschluss gemessen werden kann, insbesondere, inwieweit ein Druckabfall oder Druckanstieg nach Beaufschlagung mit einem Überdruck bzw. Unterdruck auftritt. Im Stand der Technik sind zum Beispiel folgende Dokumente enthalten:
D1 (US 2007/056638 A1) offenbart ein Verfahren und eine Vorrichtung zum Ermitteln eines Lecks in Abschnitten eines Raumfahrzeuges.
D2 (DE 41 02 923 A1) offenbart ein Luftdruckmessgerät mit einer Temperaturkompensation des Drucksensors.
D4 (US 8 201 438 B1) offenbart eine Vorrichtung zum Ermitteln von Gasleckagen.
D5 (US 2011/153232 A1) offenbart ein Drucküberwachungssystem zum Erfassen von Gaslecks.
D6 (WO 2012/081537 A1) offenbart einen Aufbau zum differentiellen Messen eines Drucks.
D7 (DE 43 35 838 C1) offenbart eine Vorrichtung zum Bestimmen von Druckdifferenzen in einem fluiden Medium.
D8 (US 5 214 957 A) offenbart eine Vorrichtung und ein Verfahren für die Dichtigkeitsprüfung eines Gebäudes.
Es wird gemäß einem Aspekt der Erfindung eine Messanordnung zur Ermittlung einer Leckagerate eines Gehäuses zur Aufnahme eines Gerätes für Satelliten und Weltraumanwendungen vorgeschlagen. Die Messeanordnung weist ein Gehäuse auf sowie einen Drucksensor, der im Gehäuse angeordnet ist und geeignet ist, einen Druck innerhalb des Gehäuses zu detektieren. Weiterhin weist die Messanordnung einen Temperatursensor auf, der geeignet ist, eine Temperatur innerhalb des Gehäuses zu detektieren sowie eine Zeitmessvorrichtung, die geeignet ist, Messzeitpunkte der Detektion des Druckes und/oder der Detektion der Temperatur zu ermitteln. Weiterhin weist die Messanordnung eine Auswerteeinheit auf, die ausgestaltet ist, basierend auf Ausgangssignalen des Drucksensors und des Temperatursensors sowie der Messzeitpunkte eine Leckagerate zu ermitteln.

Ein Vorteil kann darin gesehen werden, dass eine Luft-Leckage-Rate direkt ohne ein externes Bombing mit einem Prüfgas gemessen bzw. errechnet werden kann.

Dadurch kann eine Messung der Leckagerate vorteilhafterweise auch im Orbit und bei veränderlichen Temperaturen erfolgen. Weiterhin kann ein sicherer Druck zur Vermeidung von Korona und Lichtbogenüberschlägen durch Sekundäremissionen überwacht werden. Ein Gerät könnte damit rechtzeitig und frühzeitig über beispielsweise eine eingebaute Automatik oder auch per Telemetrie abgeschaltet werden. Zum Beispiel könnte eine Prognose hinsichtlich des leckageabhängigen Druckabfalls über die Zeit generiert werden. So könnte beispielsweise eine Druckmessung im Gehäuse nach 5 Jahren Betriebsdauer im Orbit Rückschlüsse auf den Zustand eines Gerätes zulassen. Beispielsweise könnte dies einen Vergleich eines gemessenen Drucks mit einem vorher berechneten Solldruck beinhalten, woraus sich gegebenenfalls Aussagen über eine Lebensdauer eines Gerätes ableiten ließen. In einem Beispiel ist das Gerät während eines Messevorganges stromlos, sodass keine Verlustleistung auftritt. Dies kann den Vorteil haben, dass beispielsweise entstehende Verlustwärme ein Messergebnis nicht verfälscht.

Zur Detektierung einer Druckveränderung ist eine Druckdifferenz zwischen dem Gehäuseinneren und der Umgebung notwendig. Dies kann sowohl einen Unterdruck als auch einen Überdruck der Umgebung gegenüber dem Gehäuseinneren betreffen. Beispielsweise entspricht ein In-Orbit-Einsatz des Gehäuses einer Unterdrucksituation, bei der ein Umgebungsdruck geringer ist als ein Druck im Gehäuseinneren.

Die Gehäuse können beispielsweise Innenvolumina im Bereich von einigen Kubikzentimetern, beispielsweise etwa 1 bis 15 Kubikzentimeter aufweisen. Die Sensorelemente können gemäß einem Beispiel eine Größe aufweisen, die einen Einbau in selbst kleinere Gehäuse zulassen.

Die Auswerteeinheit kann beispielsweise ein rechnergesteuertes Multimeter sein, das einen Prozessor enthält, der auf der Basis einer entsprechend ausgestalteten Software unter Einbeziehung der Ausgangssignale und Ausgangsgrößen der Sensoren sowie der Messzeitpunkte die Leckagerate berechnet.

Die Messanordnung kann gemäß einem Beispiel durch Multiplexen der Messung auch für Gehäuse oder Geräte im Multinutzen verwendet werden. Dabei kann ein schnelles elektronisches Umschalten der Messvorrichtung auf verschiedene Gehäuse und Drucksensoren genutzt werden. Dadurch können beispielsweise, je nach Größe der Geräte, bis zu 10 Geräte mit einer Messanordnung überwacht werden.

Gemäß einer Ausführungsform der Erfindung weist die Messanordnung weiterhin eine hermetisch abdichtbare Kammer mit einer Druckeinstellvorrichtung auf, die ausgestaltet ist, einen Kammerinnendruck einzustellen. Die Kammer ist ausgestaltet, das Gehäuse mit dem Drucksensor und Temperatursensor in Ihrem Innenbereich aufzunehmen. Dies kann beispielsweise eine Vakuumkammer mit einem geeichten Drucksensor und einem regelbaren Ventil zur Belüftung sein. Durch das steuerbare Ventil kann ein Kammerdruck variabel eingestellt werden. Ein Vorteil kann darin gesehen werden, dass auf diese Weise definierte Druckbedingungen zur Messung oder Kalibrierung geschaffen werden können.

Gemäß einer Ausführungsform der Erfindung weist die Kammer weiterhin einen Kammerdrucksensor zur Detektion des Kammerinnendrucks auf. Der Kammerdrucksensor ist konfiguriert, ein Referenzsignal für eine Einstellung des Ausgangssignals des Drucksensors auszugeben. Mit anderen Worten kann hiermit der im Gerät angeordnete Drucksensor durch einen Vergleich des mit dem vom diesem Drucksensor erzeugten Signal mit dem Referenzsignal kalibriert werden.

Gemäß einer Ausführungsform der Erfindung weist die Kammer eine Aufnahmevorrichtung für das Gehäuse auf und weiterhin eine Temperatureinstellvorrichtung, die geeignet ist, die Temperatur innerhalb des Gehäuses einzustellen. Diese Aufnahmevorrichtung kann beispielsweise eine Testplattform sein, die innerhalb einer Vakuumkammer angeordnet ist und die temperaturgeregelt ist. Dies kann den Vorteil haben, dass definierte Temperaturbedingungen geschaffen werden können was beispielsweise für eine Kalibrierung der Sensoren vorteilhaft sein kann.

Gemäß einer Ausführungsform der Erfindung weist der Drucksensor eine Konstantstromquelle auf, die temperaturkompensiert ist. Dies kann den Vorteil haben, dass sich bei Änderung einer Temperatur der Konstantstromquelle keine Änderung der Stromstärke und somit keine Verfälschung von Druckmesswerten ergibt.

Gemäß einer Ausführungsform der Erfindung weist die Konstantstromquelle einen Stromquellentemperatursensor zum Detektieren einer Temperatur der Konstantstromquelle auf. Weiterhin ist die Auswerteeinheit ausgeführt, eine temperaturbedingte Veränderung eines Stromes der Konstantstromquelle basierend auf einem Ausgangssignal des Stromquellentemperatursensors zu kompensieren. Mit anderen Worten kann ein möglicher temperaturbedingter Fehler der Konstantstromquelle rechnerisch berücksichtigt oder aus einem vorläufigen Messergebnis korrigierend herausgerechnet werden. Dies kann eine Genauigkeit der Messung erhöhen.

Gemäß einer Ausführungsform der Erfindung ist der Temperatursensor im Gehäuse angeordnet. Dies kann den Vorteil haben, dass der Temperatursensor direkt im Gas selbst und dadurch mit verbesserter Wärmekopplung angeordnet ist und somit bessere Messergebnisse generieren kann. Der Temperatursensor kann in einem weiteren Beispiel auch außerhalb des Gehäuses angeordnet sein, wobei eine gute wärmetechnische Kopplung zwischen dem außenliegenden Temperatursensor und dem Gas im Inneren des Gehäuses angestrebt wird.

Gemäß einer Ausführungsform der Erfindung ist das Gerät ein elektronischer Verstärker. Beispielsweise kann der Verstärker ein Mikrowellen-Leistungsverstärker zum Einsatz im Weltraum, beispielsweise in einem Satelliten, sein.

Gemäß einem Aspekt der Erfindung wird ein Verfahren zum Ermitteln einer Leckagerate eines Gases in einem Gehäuse zur Aufnahme eines elektrischen Gerätes vorgeschlagen, wobei das Gerät und das Gehäuse zur Verwendung im Weltraum vorgesehen sind. Das Verfahren weist die folgenden Schritte auf: Vorsehen eines Drucksensors im Gehäuse, Vorsehen eines Temperatursensors, Vorsehen einer Zeitmessvorrichtung, Verschließen des Gehäuses, Detektieren einer Druckveränderung mit dem Drucksensor, Detektieren einer korrespondierenden Temperaturveränderung mit dem Temperatursensor und Ermittlung der korrespondierenden Messzeitpunkte mit der Zeitmessvorrichtung sowie Ermitteln der Leckagerate des Gehäuses durch eine Auswerteeinheit basierend auf der Druckveränderung, der Temperaturveränderung und den Messzeitpunkten.

Das Detektieren der Druckveränderung und der Temperaturveränderung kann in einem Beispiel während des Einsatzes des Gehäuses und des Gerätes im Weltraum stattfinden, aber auch am Boden, beispielsweise im Rahmen eines Herstellungsprozesses. Die Messzeitpunkte können beispielsweise einen Zeitraum bestimmen, in dem ein Druckabfall stattfindet. Beispielsweise kann zu einem definierten Zeitpunkt der momentane Druck und die momentane Temperatur gemessen werden. Diese Messungen können zu einem zweiten definierten Zeitpunkt wiederholt werden, woraus sich zum einen ein Zeitraum der Messung ergibt, zum anderen die korrespondierende Druckveränderung und Temperaturveränderung in diesem Zeitraum. Auf dieser Basis kann die Auswertungseinheit mithilfe beispielsweise geeigneter Software unter Berücksichtigung der physikalischen Zusammenhänge eine Leckagerate berechnen. In einem Beispiel beträgt ein Zeitraum zwischen einem ersten Messzeitpunkt und einem zweiten Messzeitpunkt zwischen 30 und 60 Stunden und eine Druckveränderung 0,1 bis 3 mbar. In einem Beispiel wird die Ermittlung der Leckagerate unter Kompensation der temperaturabhängigen Volumenausdehnung des eingeschlossenen Gases ermittelt.

In einer Ausführungsform der Erfindung weist das Verfahren vor dem Schritt des Verschließens des Gehäuses den Schritt des Ermittelns eines Temperaturkoeffizienten des Drucksensors auf. Das Ermitteln der Leckagerate basiert weiterhin auf dem Temperaturkoeffizienten des Drucksensors. Ein Vorteil kann darin gesehen werden, dass temperaturbedingte Abweichungen des Ausgangssignals des Drucksensors rechnerisch ausgeglichen werden können.

In einer Ausführungsform der Erfindung weist das Ermitteln des Temperaturkoeffizienten des Drucksensors die Schritte auf: Einstellen eines zeitlich konstanten Druckes im Gehäuse, Verändern einer Temperatur im Gehäuse, Detektieren einer Ausgangsspannungsänderung am Drucksensor, Berechnen des Temperaturkoeffizienten des Drucksensors basierend auf der Ausgangsspannungsänderung und der Temperatur im Gehäuse. Mit anderen Worten wird eine Abhängigkeit der Ausgangsspannung des Drucksensors von einer Veränderung der Temperatur erfasst, um diese in Form eines ermittelten Temperaturkoeffizienten bei der Ermittlung der Leckagerate zu berücksichtigen. Dies kann eine Genauigkeit der Messung der Leckagerate erhöhen. In einem Beispiel ist das Gehäuse in einer hermetisch abdichtbaren Kammer angeordnet und offen, sodass durch eine Veränderung eines Kammerdruckes auch der Druck im Gehäuse einstellbar ist.

Gemäß einer Ausführungsform der Erfindung vor dem Schritt des Verschließens des Gehäuses den weiteren Schritt des Ermittelns eines Temperaturkoeffizienten der Konstantstromquelle auf. Eine temperaturunabhängige Konstantstromquelle kann insbesondere für den Drucksensor erforderlich sein.

Das Ermitteln der Leckagerate basiert weiterhin auf dem Temperaturkoeffizienten der Konstantstromquelle. Durch das Berücksichtigen des Temperaturkoeffizienten der Konstantstromquelle kann ein möglicher temperaturbedingter Fehler der Konstantstromquelle durch die Auswertungseinheit kompensiert werden. Dies kann eine Genauigkeit der Messung und der Berechnung der Leckagerate erhöhen.

Gemäß einer Ausführungsform der Erfindung weist das Ermitteln des Temperaturkoeffizienten der Konstantstromquelle die folgenden Schritte auf: Vorsehen eines Stromquellentemperatursensors an der Konstantstromquelle, wobei der Stromquellentemperatursensor ausgeführt ist, eine Temperatur der Konstantstromquelle zu detektieren. Weiterhin erfolgt ein Vorsehen einer Strommessvorrichtung zur Messung einer Stromstärke der Konstantstromquelle, ein Verändern einer Temperatur der Konstantstromquelle, ein Detektieren einer Veränderung der Stromstärke der Konstantstromquelle mit der Strommessvorrichtung und Ermitteln des Temperaturkoeffizienten der Konstantstromquelle basierend auf der Veränderung der Temperatur und auf der Veränderung der Stromstärke. Mit anderen Worten wird durch gezieltes Verändern der Temperatur eine korrespondierende temperaturbedingte Änderung der Stromstärke erfasst und daraus der Temperaturkoeffizient der Konstantstromquelle ermittelt. Dies kann durch die Auswertungseinheit bei der Berechnung der Leckagerate berücksichtigt werden, was eine Genauigkeit der Berechnung der Leckagerate erhöhen kann.

Gemäß einem Beispiel werden ein Verfahren zur Prüfung der Dichtheit eines Gehäuses sowie eine entsprechende Gehäusekomponente bereitgestellt, welche eine neuartige, vereinfachte Dichtheitsprüfung insbesondere ohne besonderen externen Messaufwand realisiert.

Demgemäß wird ein Verfahren zur Prüfung der Dichtheit eines Gehäuses, eine Gehäusekomponente, eine Plattform, insbesondere Satellit, mit einer Gehäusekomponente sowie die Verwendung einer Gehäusekomponente in einer Überdruck-, Unterdruck- bzw. Vakuumapplikation gemäß den unabhängigen Ansprüchen bereitgestellt. Bevorzugte Ausgestaltungen ergeben sich aus den abhängigen Ansprüchen.

Gemäß einem Beispiel wird ein Verfahren zur Prüfung der Dichtheit eines Gehäuses bereitgestellt, aufweisend die Schritte i) Vorsehen eines Drucksensors in einem Gehäuse, wobei der Drucksensor eingerichtet ist zum Detektieren eines Druckes im Gehäuse, ii) Verschließen des Gehäuses und iii) Detektieren eines Druckes im Gehäuse.

Gemäß einem Beispiel wird eine Gehäusekomponente bereitgestellt, aufweisend ein Gehäuse mit einem Innenvolumen sowie ein Sensorelement, eingerichtet zum Detektieren eines Druckes im Gehäuseinnenvolumen.

Gemäß einem Beispiel wird eine Plattform, insbesondere ein Satellit, mit einer Gehäusekomponente angezeigt.

Gemäß einem Beispiel wird eine Gehäusekomponente in einer Überdruck-, Unterdruck- bzw. Vakuumapplikation verwendet.

Ein Aspekt kann beispielhaft darin gesehen werden, dass ein hermetisch dichtes Gehäuse für die Abdichtung integrierter Mikroelektronik vorgesehen wird, in welchem Gehäuse bzw. dessen Gehäuseinnenvolumen ein Drucksensor vorgesehen ist, der den Kammerdruck eines eingeschlossenen Gases, zum Beispiel Stickstoff, Helium oder ein Stickstoff-Helium-Gemisch, direkt und insbesondere zu einem beliebigen Zeitpunkt messen kann. Aus bestimmten Druckverhältnissen bzw. einem zeitlichen Verlauf von Druckverhältnissen bzw. Drücken lässt sich unter Beachtung der GasTemperatur damit auf eine Leckrate des Gehäuses schließen. Der Innendruck eines hermetisch dichten Gehäuses ist aufgrund der bekannten physikalischen Zusammenhänge temperaturabhängig. Beispielsweise kann ein Temperaturkoeffizient eines eingeschlossenen Gases 3,66 mbar/K betragen. Um insbesondere kleine Leckagen nachzuweisen, kann es notwendig sein, vergleichsweise geringe Druckdifferenzen über einen längeren Zeitraum, beispielsweise 1 mbar über einen Zeitraum von 48 Stunden, zu messen.

Gemäß einem Beispiel mag das Detektieren des Druckes ein Detektieren einer äquivalenten Luft-Leckrate oder einer zeitlichen Druckveränderung umfassen.

Ein mögliches Sensorelement bzw. Drucksensor ist ein MEMS (Micro Electro Mechanical System) Chipsensor, beispielsweise vom Typ MS 7801 des Herstellers MEAS. Derartige Sensorelemente sind geeignet für den Einsatz in Hybridschaltungen für Satellitenapplikationen, z.B. Mikrowellenmodule oder optoelektronische Hybridmodule für Satellitenkommunikationsapplikationen. Ferner sei angemerkt, dass auch in militärischen oder medizinischen Applikationen hermetisch dichte Hybrid-Module eingesetzt werden.

Verwendbar sind z.B. kapazitive MEMS Sensoren, welche ihre Kapazität mittels eines angelegten Druckes ändern oder auch piezoresistive MEMS Sensoren, welche direkt eine lineare, druckabhängige Spannung abgeben, wenn ein konstanter Quellstrom angelegt wird. Der zuvor angesprochene Sensor des Typs MS7801 ist dabei ein piezoresistiver MEMS Chipsensor. Ein solcher Sensor kann eine interne Vakuumreferenzkammer mit Siliziummembran aufweisen und ermöglicht dadurch absolute Druckmessungen im Bereich von 0 bis 1 bar bzw. Vakuum bis Normalatmosphäre.

Das Verfahren kann dabei in den zuvor genannten MIL Standards spezifizierte äquivalente Luft-Leckraten direkt bestimmen. Diese sind nach MIL-STD-883J (Classes S, K und V für Space) bei einem 3 cm³ großen Kammervolumen mit 1,0*10⁻⁸ atm*cm³/s (mbar*l/s) bzw. gemäß MIL-STD-750F bei einem 3 cm³ großen Kammervolumen mit 1,0*10⁻⁸ atm*cm³/s (mbar*l/s) spezifiziert.

Gemäß einem Beispiel mag das Detektieren des Druckes ein Detektieren eines Druckabfalls bei Anordnung des Gehäuses in einer Unterdruck- bzw. Vakuumumgebung und/oder ein Detektieren eines Druckanstiegs bei Anordnung des Gehäuses in einer Überdruckumgebung umfassen.

Das Verfahren kann dabei entweder einen Druckabfall ("pressure decay") bei einer Unterdruck- bzw. Vakuumumgebung oder den Druckanstieg ("pressure rise") bei einer Überdruckumgebung detektieren. Dabei wird ausschließlich die hermetisch dichte Kammer des Gehäuses, somit das Innenvolumen des Gehäuses überprüft. Das Verfahren ist somit unabhängig von weiteren Umgebungseffekten. Weiterhin kann auf das typische "bombing", das Hineindrücken von Detektorgas in einer Überdruckkammer, typischerweise bis zu 72 Stunden bei 3 bar, verzichtet werden, wie es zum Beispiel bei einem Helium-Lecktest eingesetzt wird.

Gemäß einem Beispiel mag das Detektieren des Druckes in einer kontrollierten Überdruckumgebung für eine definierte Zeiteinheit erfolgen, insbesondere während eines Bombing-Vorgangs.

Sollte aufgrund einer unklaren Lecksituation, aufgrund zum Beispiel einer längeren Liegezeit in der Fertigung, ein Bombing, mit beispielsweise Stickstoff anstatt Helium, notwendig sein, so kann diese Bombing-Zeit direkt als eine Messzeit für einen Druckanstieg verwendet werden. Hierdurch ergibt sich eine signifikante Zeitersparnis gegenüber einem Heliumverfahren.

Gemäß einem Beispiel mag durch bzw. beim Verschließen des Gehäuses eine Temperaturerhöhung im Gehäuse auftreten, die einen ersten Gehäuseinnendruck hervorruft, wobei bei einem nachfolgenden Abkühlungsprozess der Gehäuseinnendruck auf einen zweiten Gehäuseinnendruck abnimmt, wobei das Detektieren des Druckes ein Detektieren des Druckabfalls im Gehäuse vom ersten Gehäuseinnendruck auf den zweiten Gehäuseinnendruck umfassen mag.

Gemäß einer einem Beispiel mag durch das Detektieren des Druckabfalls im Gehäuse vom ersten Gehäuseinnendruck auf den zweiten Gehäuseinnendruck eine Arbeitstemperatur beim Verschließen des Gehäuses und/oder die Dichtigkeit des verschlossenen Gehäuses bestimmbar sein.

Beim Verschließen eines Gehäuses, beispielsweise durch einen Schweiß- oder Lötvorgang, kann sich das eingeschlossene Gas (z.B. Stickstoff) aufgrund der Laserenergie zum Teil erheblich erwärmen. Nach dem Ende des Verschlussprozesses kühlt das erhitzte Gas wiederum ab. Hierdurch ergibt sich ein Druckabfall im Gehäuse bzw. im Innenvolumen des Gehäuses aufgrund des Temperaturkoeffizienten des eingeschlossenen Gases nach Gay-Lussac. Dieser Temperaturkoeffizient beträgt 1/273,15/K bei einer Ausgangstemperatur von 0°C.

Wurde das Gas zum Beispiel bei 1020 mbar Druck in einer Schweißanlage während des Verschlusses durch auftretende Verschlussenergie, z.B. Laserenergie, auf exemplarisch 80°C erhitzt, ergibt sich nach Abkühlung auf 20°C z.B. ein Druckabfall von 1020 mbar auf 846,7 mbar. Dieser Mechanismus erlaubt gleichfalls Rückschlüsse auf die Temperatur im Objekt beim Verbindungsprozess, beispielsweise beim Laserschweißen, insbesondere unter der Annahme, dass das Modul dicht verschlossen ist. In anderen Worten mag eine Arbeitstemperatur anhand des sich nach einem Abkühlungsprozess einstellenden Kammerdruckes bestimmbar sein. Ein Grobleck mag im Wesentlichen sofort entdeckt werden, falls sich ein Druckabfall überhaupt nicht einstellt.

Weiterhin stellt ein Druckabfall nach dem Verbindungsprozess auf zum Beispiel 847 mbar sofort eine Druckdifferenz gegenüber dem Atmosphärendruck bzw. dem Außendruck des Gehäuses her, die eine anschließende Lecktestdruckmessung ohne zusätzliche Überdruck- bzw. Unterdruckeinrichtung ermöglicht. Groblecks im Bereich von 10⁻³ bis 10⁻⁴ mbar*l/s können so innerhalb von weniger als einer Minute detektiert werden.

Gemäß einem Beispiel erfolgt das Verschließen des Gehäuses durch Schweißen oder Löten, insbesondere Laserschweißen, Rollnahtschweißen oder Laserlöten.

Gemäß einer einem Beispiel mag der detektierte Druck an weitere Elektronik im Gehäuse und/oder außerhalb des Gehäuses weiterleitbar sein.

Die Druckinformation kann somit direkt im Gehäuse von geeigneter Elektronik verarbeitet werden, um beispielsweise bei Detektieren eines nicht dichten Zustandes geeignete Maßnahmen einleiten zu können. Entsprechendes kann von Elektronik außerhalb des Gehäuses durchgeführt werden, wobei das Detektieren im Gehäuse ein autark aufgebautes Elektronikmodul in einer Gehäusekomponente ermöglicht.

Gemäß einem Beispiel mag eine Leckrate des Gehäuses direkt bestimmbar sein unter Verwendung eines definierten Gehäuseinnenvolumen-Wertes und einer zeitlichen Druckänderung.

Gemäß einem Beispiel mag das Sensorelement unter Verwendung einer MehrPunkt-Messung geeicht sein.

Das Sensorelement mag beispielsweise für jedes Modul separat über eine MehrPunkt-Druckmessung, bezogen auf Atmosphärendruck und Vakuum, unter Verwendung eines kalibrierten Messgerätes präzise geeicht werden. Dies mag als vollautomatische Prozedur durchgeführt werden, wodurch über den Druckabfall und ein gegebenes Gehäusevolumen, welches gehäusespezifisch sein kann, direkt eine Luft-Leckrate berechnet werden kann.

Gemäß einem Beispiel mag der Drucksensor temperaturkompensiert ausgebildet sein.

Zur Steigerung einer Messempfindlichkeit, oder beispielsweise auch einer Erhöhung der erforderlichen Messgenauigkeit und Auflösung der Messung, mag der Drucksensor temperaturkompensiert sein. Diese Kompensation kann für eine Zieltemperatur während des Betriebes, welche sich beispielsweise durch Eigenerwärmung des Objektes infolge seiner Verlustleistung einstellt, erfolgen, wodurch die Messung durch den Drucksensor bevorzugt erfolgen kann. Eine entsprechende Kompensierung mag nach einem MIL-Standard erforderlich sein.

Gemäß einem Beispiel mag bei der Messung einer Druckveränderung der Temperaturkoeffizient (z.B. gemäß Gay-Lussac) eines eingeschlossenen Gases, beispielsweise Stickstoff, mit einem Faktor, beispielsweise 3,411*10-3/K für eine Ausgangstemperatur von 20°C, rechnerisch kompensiert sein.

Vorzugsweise wird die Temperaturabhängigkeit des gemessenen Gasdruckes rechnerisch, mit Hilfe geeigneter Software, ermittelt.

Durch eine geeignete Kalibrierung bzw. Temperaturkompensierung kann eine Druckmessung in weiten Grenzen temperaturunabhängig sein. Dies gilt insbesondere im Falle, dass eine Lecktestmessung ausschließlich in einem vergleichsweise kleinen Temperaturfenster von zum Beispiel +/-3°C durchgeführt wird.

Die Messmethode ist dabei weitgehend unabhängig vom Füllgas, da sich die dynamischen Viskositätswerte der bevorzugt verwendeten Gase, wobei die Viskositätswerte für das Passieren einer Leckage verantwortlich sind, im Wesentlichen gleichen bzw. zumindest stark ähneln. Helium weist dabei einen Viskositätswert von η=1.86*10⁻⁵ Pa*s, Stickstoff η=1.66*10⁻⁵ Pa*s sowie Luft η=1.71*10⁻⁵ Pa*s auf. Wird eine Gehäusekomponente somit in ihrem Innenvolumen mit unterschiedlichen Gasfüllungen versehen, ergeben diese nur vernachlässigbare Unterschiede in den ermittelten Leckraten.

Gemäß einem Beispiel mag das Detektieren des Druckes des Gehäuseinnenvolumens im Wesentlichen während der gesamten Betriebsdauer bzw. Lebensdauer einer Gehäusekomponente vornehmbar sein.

Insbesondere durch das Vorsehen des Drucksensors im Gehäuse kann somit die Messung eines Druckabfalls zu jedem beliebigen Betriebszeitpunkt eines Gehäusemoduls erfolgen. Es wird somit ein In-Orbit-Monitoring der Hermetizität eines Moduls über dessen gesamte Lebensdauer ermöglicht.

Nachfolgend wird anhand der beigefügten Zeichnungen näher auf Ausführungsbeispiele der Erfindung eingegangen. Es zeigen:
- **Fig. 1**: eine exemplarische Ausgestaltung der Anordnung von Sensorelementen in einer Gehäusekomponente gemäß einem Ausführungsbeispiel der vorliegenden Erfindung;
- **Fig. 2**: eine exemplarische Ausgestaltung eines elektronischen Schaltkreises mit Sensorelement zur Montage in einer Gehäusekomponente gemäß einem Ausführungsbeispiel der vorliegenden Erfindung;
- **Fig. 3**: eine exemplarische Messung einer Leckrate an einem hermetisch dichten Modul mit und ohne Temperaturkompensation gemäß einem Ausführungsbeispiel der vorliegenden Erfindung;
- **Fig. 4**: ein exemplarischer Aufbau eines Sensorelementes gemäß einem Ausführungsbeispiel der vorliegenden Erfindung;
- **Fig. 5**: eine exemplarische Ausgestaltung von Offset und Temperaturkompensation des Sensorelementes der Figur 4; und
- **Fig. 6**: eine exemplarische Ausgestaltung eines Verfahrens zur Prüfung der Dichtheit eines Gehäuses gemäß einem Ausführungsbeispiel der vorliegenden Erfindung;
- **Fig. 7**: eine exemplarische Ausgestaltung einer Messeanordnung zur Ermittlung einer Leckagerate eines Gehäuses gemäß einem Ausführungsbeispiel der Erfindung;
- **Fig. 8**: einen exemplarischen Aufbau einer Konstantstromquelle mit einem Stromquellentemperatursensor gemäß einem Ausführungsbeispiel der Erfindung;
- **Fig. 9**: ein Beispiel eines Verfahrens zum Ermitteln einer Leckagerate eines Gases in einem Gehäuse gemäß einem Ausführungsbeispiel der Erfindung;
- **Fig. 10**: ein Beispiel eines Verfahrens zum Ermitteln eines Temperaturkoeffizienten eines Drucksensors gemäß einem Ausführungsbeispiel der Erfindung;
- **Fig. 11**: ein Beispiel eines Verfahrens zum Ermitteln eines Temperaturkoeffizienten einer Konstantstromquelle gemäß einem Ausführungsbeispiel der Erfindung.

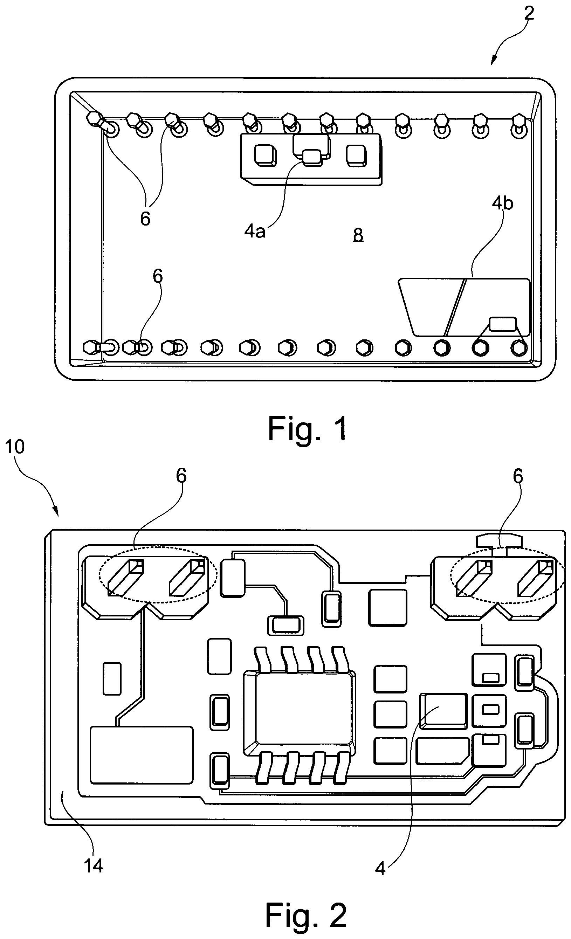

Weiter Bezug nehmend auf Figur 1 wird eine exemplarische Ausgestaltung der Anordnung von Sensorelementen in einer Gehäusekomponente gemäß der vorliegenden Erfindung dargestellt.

Figur 1 zeigt eine Gehäusekomponente 2, genauer einen Teil einer Gehäusekomponente bzw. dessen Unterseite. Eine Mehrzahl von Kontaktelementen 6 ist vorgesehen, welche auf einer Seite der Gehäusekomponente 2 diese verlassen. Die Kontaktelemente 6 stellen dabei eine leitfähige Verbindung aus dem Innenraum bzw. Innenvolumen 8 der Gehäusekomponente 2 nach außen dar. Die Kontaktelemente 6 können somit eine mechanische Befestigung und/oder eine elektrische Kontaktierung der Gehäusekomponente 2 mit außenliegenden weiteren Elektronikkomponenten bereitstellen.

In Figur 1 sind exemplarisch zwei Sensorelemente 4 im Innenvolumen 8 der Gehäusekomponente 2 vorgesehen. In einem Einsatzszenario mag jedoch ausschließlich ein einzelnes Sensorelement 4 vorgesehen sein. Sensorelement 4a kann hierbei ein MEMS-Chip-Sensorelement sein, welches in der Gehäusekomponente gebondet ist, während Sensorelement 4b ein kapazitiver MEMS-Chip-Sensor sein mag.

Weitere Elektronikkomponenten, welche in einem Betriebsfall in der Gehäusekomponente 2 angeordnet sein mögen, sind in Figur 1 nicht weiter dargestellt. Diese weiteren Komponenten mögen jedoch gleichfalls geeignet mit der Außenseite der Gehäusekomponente 2 unter Verwendung der Kontaktelemente 6 verbindbar sein.

Weiter Bezug nehmend auf Figur 2 ist eine exemplarische Ausgestaltung eines elektronischen Schaltkreises mit Sensorelement zur Montage in einer Gehäusekomponente gemäß der vorliegenden Erfindung dargestellt.

Figur 2 zeigt eine exemplarische Ausgestaltung eines radiometrischen Instrumentenverstärkers. Die genaue Ausgestaltung bzw. der Einsatzbereich der Schaltung ist jedoch für das erfinderische Konzept nicht relevant.

Ein Sensorelement 4 ist exemplarisch auf einer Leiterplatte 14 der Schaltung 10 vorgesehen. Ebenfalls auf der Leiterplatte 14 angeordnet sind Kontaktelemente 6, welche geeignet eine Gehäusewandung der Gehäusekomponente 2 durchstoßen können oder aber geeignet an die Kontaktelemente 6 der Figur 1 anbindbar sind. Figur 2 zeigt damit die Integration eines Sensorelementes 4 in einer Schaltung. Benötigte Anbindungen wie beispielsweise eine Strom- bzw. Spannungsversorgung und Messausgänge für das Sensorelement 4 mögen direkt auf der Leiterplatte 14 bereitgestellt sein. Das Sensorelement 4 lässt sich somit funktional und logisch in die Schaltung 10 integrieren. Weiterhin kann auch das Schaltungsverhalten der Schaltung 10 abhängig von einem Messwert des Sensorelementes 4 beeinflussbar sein.

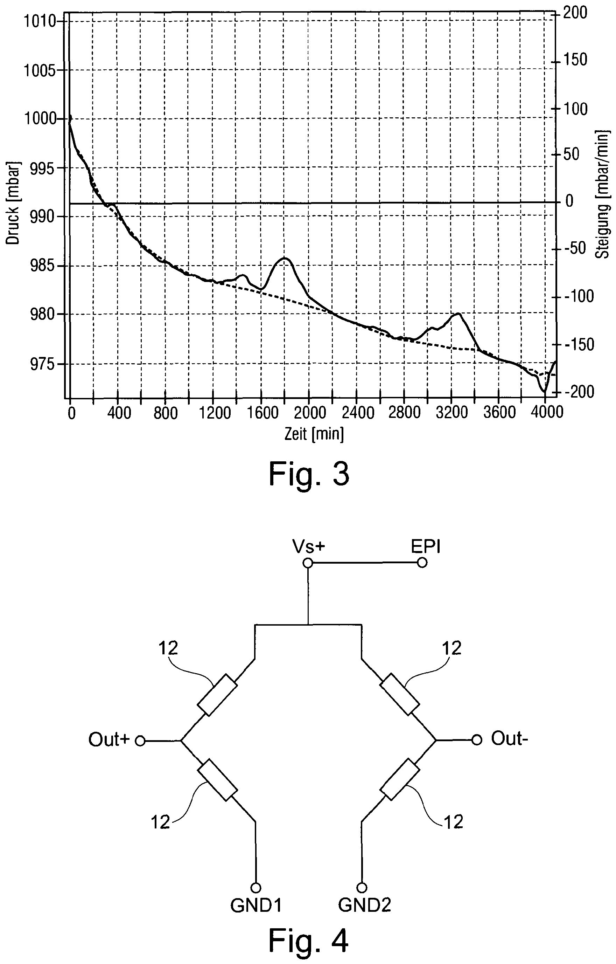

Weiter Bezug nehmend auf Figur 3 ist eine exemplarische Messung einer Leckrate an einem hermetisch dichten Modul mit und ohne Temperaturkompensation der vorliegenden Erfindung dargestellt.

Hierbei zeigt sich ein Druckabfall im Innenvolumen eines hermetisch dichten Moduls bzw. einer Gehäusekomponente 2. Dabei stellt sich beispielsweise ein Druckabfall vom atmosphärischen Umgebungsdruck von 1000 mbar auf einen Restdruck von ca. 975 mbar im Verlauf von 4000 Minuten dar. Die durchgezogene Linie ist dabei nicht temperaturkompensiert, was sich anhand der Erhöhungen in der Kurve bei 1500, 1800 und 3250 Minuten darstellt. Die gestrichelte Linie wiederum ist eine temperaturkompensierte Messkurve. Der vergleichsweise steile Druckabfall auf der linken Seite der Kurve kann dabei auch zumindest teilweise einem Abkühlungsprozess des Gehäuses geschuldet sein.

Weiter Bezug nehmend auf Figur 4 ist ein exemplarischer Aufbau eines Sensorelementes gemäß der vorliegenden Erfindung dargestellt.

Figur 4 zeigt eine exemplarische Ausgestaltung des Sensorelementes 4, aufgebaut als eine Wheatstonesche Brücke aus piezosensitiven Widerständen 12 auf einer Siliziummembran. Die Wheatstonesche Brücke weist einen Eingang für eine Versorgungsspannung Vₛ₊ auf, welcher exemplarisch direkt mit der epitaxialen Schicht der Membran einer versiegelten Vakuumreferenzkavität verbunden ist. Weiterhin vorgesehen sind piezosensitive Widerstände 12, welche von Versorgungsspannung Vₛ₊ auf Masse (GND1 bzw. GND2) durchverbunden sind. Jeweils zwei Widerstände 12 sind mit dem positiven Ausgang Out+ sowie dem negativen Ausgang Out- verbunden.

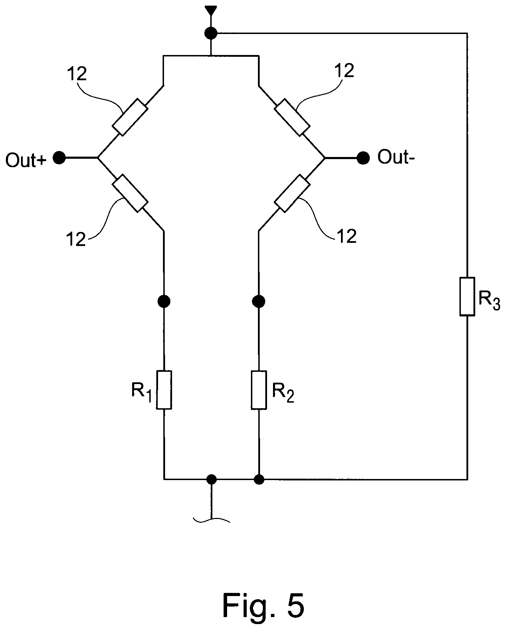

Weiter Bezug nehmend auf Figur 5 ist eine exemplarische Ausgestaltung von Offset und Temperaturkompensation des Sensorelementes der Figur 4 dargestellt.

Hierbei wird die Wheatstonesche Brücke aus piezosensitiven Widerständen 12 der Figur 4 um drei Widerstände R1, R2 und R3 ergänzt, um einerseits unter Verwendung der Widerstände R1 und R2 eine Offset-Kompensation (Nullpunkt im Vakuum) sowie unter Verwendung von Widerstand R3 eine Temperaturkompensation zu ermöglichen.

Die benötigten Elemente für die Temperatur- und Offsetkompensation können dabei beispielsweise als gedruckte Widerstände in LTCC Multilayer Technologie ausgeführt sein, welche bei Bedarf mittels Laserabgleich einstellbar sind. Ein einfacher Parallelwiderstand R3 zur gesamten Brücke mag dabei für eine Temperaturkompensation ausreichen. Dadurch mag sich der Temperaturkoeffizient des Brückenwiderstandes der Wheatstoneschen Brücke, welcher typischerweise im Bereich von 2800 ppm/°C liegt, auf 1900 ppm/°C reduzieren lassen. Ein derartiger Wert mag in einer bestimmten Applikation einen Temperaturkoeffizienten der maximalen Ausgangsspannung, welche bei zum Beispiel 1 bar auftritt, mit -1900 ppm/°C im Wesentlichen vollständig kompensieren. Für ein eingeschränktes Temperaturfenster von zum Beispiel +/- 3°C zur Lecktestmessung ergibt sich somit eine im Wesentlichen vollständige Kompensation.

Eine Offsetspannung eines Sensorelementes 4 aufgrund von Toleranzen in der Wheatstoneschen Brücke auf dem Chip des Sensorelementes 4 mag ebenfalls über laserbare, gedruckte Widerstände R1, R2 in LTCC Multilayer Technologie auf null abgeglichen werden.

Hierfür mögen insbesondere zwei Widerstände verwendet werden, die zwischen den Terminals GND 1 und GND 2 der Wheatstoneschen Brücke in Reihe geschaltet angeordnet sind. Der Mittelpunkt beider Widerstände wird auf Masse gelegt. Ein Laserabgleich von zumindest einem der beiden Widerstände R1, R2 mag durch einen geeigneten Laserabgleich-Algorithmus Toleranzen in der Wheatstoneschen Brücke ausgleichen.

Die LTCC Multilayer Technologie stellt durch ihre Hermetizität von einer Substratlage zur nächsten eine bevorzugte Konnektivität für die Verdrahtung eines Sensorelementes von der inneren, hermetischen Kammer bzw. dem Innenvolumen 8 der Gehäusekomponente 2 nach außen bereit. Hierdurch müssen keine separaten Anschlüsse für ein Sensorelement 4 vorgesehen sein, es können vielmehr gewöhnliche hermetisch dichte Gehäuse verwendet werden.

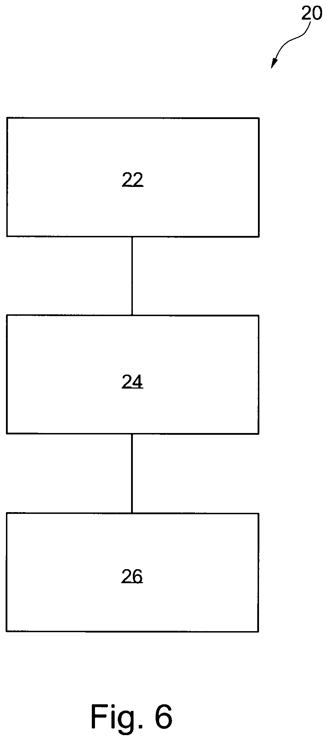

Weiter Bezug nehmend auf Figur 6 ist eine exemplarische Ausgestaltung eines Verfahrens zur Prüfung der Dichtheit eines Gehäuses gemäß der vorliegenden Erfindung dargestellt.

Das Verfahren 20 zur Prüfung der Dichtheit eines Gehäuses 2 weist dabei die Schritte auf: Vorsehen 22 eines Drucksensors 4 in einem Gehäuse 2, wobei der Drucksensor 4 eingerichtet ist zum Detektieren eines Druckes im Gehäuse 2; Verschließen 24 des Gehäuses 2 und Detektieren 26 eines Druckes im Gehäuse 2.

Die vorliegende Erfindung kann vorteilhafterweise auch für Mehrkammerdesigns eingesetzt werden; bei derartigen Mehrkammerdesigns sind mehrere voneinander getrennte, hermetisch dichte Gehäuse-Kammern im gleichen hybriden Modul vorgesehen. Die herkömmliche Helium-Messtechnik versagt hier komplett.

Die vorliegende Erfindung kann auch zum Abschalten von Hochfrequenz-verstärkern oder anderen empfindlichen elektronische Komponenten, die in der Satellitenelektronik zum Einsatz kommen, verwendet werden; zum Beispiel zur In-Orbit Drucküberwachung im Zusammenhang mit dem sogenannten "Multipaction"-Effekt. Hierbei handelt es sich um durch Hochfrequenzfelder ausgelöste Elektronenlawinen durch Sekundärelektronenemission die Corona-Effekte oder Überschläge verursachen können. Dies passiert insbesondere bei Drücken in der Nähe von Vakuum (sogenannter Zwischendruckbereich) und kann Elemente des Hochfrequenzverstärkers oder dessen Umgebung zerstören. Ist ein Hochfrequenz-Leistungsverstärker in ein hermetisch dichtes Gehäuse eingebaut, z.B. ein Halbleiterverstärker (Solid State Power Amplifier) in Chip & Wire-Technologie, und würde dieser über die Lebensdauer seinen Gasdruck (Verschlussdruck) verlieren, so könnte es zu "Multipaction" kommen. Durch Abschaltung der Geräte basierend auf der Messtechnik können Sekundärschäden an der Satellitenelektronik verhindert werden

Die vorliegende Erfindung kann somit zum druckabhängigen "Ein- und Ausschalten" von Messgeräten bzw. Komponenten im Orbit oder während der Startphase (Zwischendruckbereich, Schutz vor "Multipaction") verwendet werden.

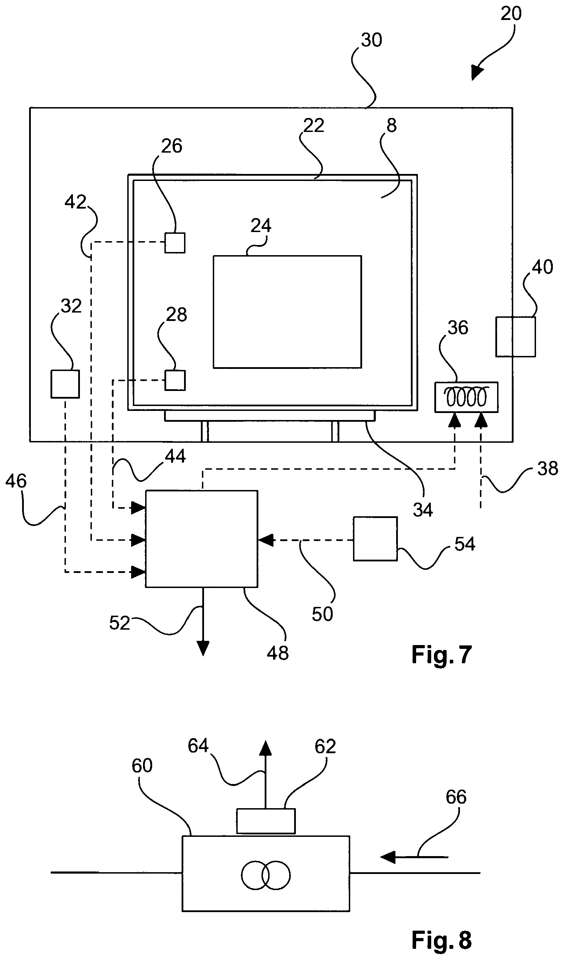

Fig. 7 zeigt exemplarisch ein Beispiel einer Messanordnung 20 gemäß einem Ausführungsbeispiel der Erfindung zur Ermittlung einer Leckagerate eines Gehäuses 22 zur Aufnahme eines Gerätes 24 für Satelliten und Weltraumanwendungen. Ein Gehäuse 22, was ausgestaltet ist, hermetisch abgeschlossen zu werden, weist in einem Innenvolumen 8 ein Gerät 24 auf. Dieses Gerät 24 kann beispielsweise eine elektronische Baugruppe wie beispielsweise ein Verstärker oder Frequenzumsetzer sein, aber auch jede andere funktionelle Baugruppe, für die ein hermetisch abgeschlossenes Gehäuse 22 notwendig sein kann. Beispielsweise kann die elektronische Baugruppe in Form einer Leiterplatte 14 (siehe Fig. 2) mit Abmaßen im Zentimeterbereich mit darauf aufgebrachten elektronischen Bauelementen realisiert sein. Im Innenvolumen 8 des Gehäuses 22 ist ein Drucksensor 26 angeordnet, der beispielsweise in MEMS-Technologie ausgeführt sein kann. Dieser Drucksensor 26 ist ausgestaltet, einen Innendruck im Innenvolumen 8 des Gehäuses 22 zu messen. Weiterhin ist im Innenvolumen 8 des Gehäuses 22 ein Temperatursensor 28 angeordnet, der ausgestaltet ist, eine Innentemperatur im Innenvolumen 8 zu detektieren, d.h. insbesondere zu messen, und ein Ausgangssignal 44 des Temperatursensors 28 zu erzeugen. Die Messanordnung 20 weist im hier gezeigten Beispiel weiterhin eine hermetisch abdichtbare Kammer 30 auf. In einem Innenbereich der Kammer 30 sind das Gehäuse 22, das Gerät 24, der Drucksensor 26, der Temperatursensor 28 sowie ein Kammerdrucksensor 32 angeordnet. Der Kammerdrucksensor 32 ist konfiguriert, mit einem Ausgangssignal 46 ein Referenzsignal für eine Einstellung eines Ausgangssignals 42 des Drucksensors 26 bereitzustellen.

Zur Aufnahme bzw. zum Abstützen des Gehäuses 22 weist die Kammer 30 eine Aufnahmevorrichtung 34 auf. Zur gezielten Temperierung des Gehäuses 22 kann die Aufnahmevorrichtung 34 weiterhin Heizelemente oder Kühlelemente (nicht gezeigt) aufweisen. Die Kammer 30 weist weiterhin eine Temperatureinstellvorrichtung 36 auf, die ausgestaltet ist, die Temperatur innerhalb des Gehäuses 22 einzustellen. Diese Einstellung kann beispielsweise manuell über von außen zugängliche Einstellvorrichtungen 38 erfolgen. Die Kammer 30 weist weiterhin eine Druckeinstellvorrichtung 40 auf, die dazu dient, einen Kammerinnendruck einzustellen.

Außerhalb der Kammer 30 ist eine Auswerteeinheit 48 angeordnet, die ausgestaltet ist, basierend auf den Ausgangssignalen 42, 44 des Drucksensors 26 und des Temperatursensors 28 sowie basierend auf Messzeitpunkten 50 eine Leckagerate 52 zu ermitteln. Die Messzeitpunkte 50 werden von einer Zeitmessvorrichtung 54 bereitgestellt. Die Zeitmessvorrichtung 54 ist so konfiguriert, dass sie Messzeitpunkte 50 feststellt, bei denen die korrespondierenden Druckmessungen und Temperaturmessungen über den Drucksensor 26 und den Temperatursensor 28 stattfinden. Mithilfe der Messzeitpunkte 50 kann beispielsweise eine Messdauer der Messung ermittelt werden.

In Fig. 8 ist eine Konstantstromquelle 60 gemäß einem Ausführungsbeispiel der Erfindung gezeigt, die Teil des Drucksensors 26 (siehe Fig. 7) sein kann. Zum Detektieren einer Temperatur der Konstantstromquelle 60 ist an der Konstantstromquelle 60 ein Stromquellentemperatursensor 62 angebracht. Ein Ausgangssignal 64 des Stromquellentemperatursensors 62 kann beispielsweise einer Auswerteeinheit 48 (siehe Fig. 7) zugeführt werden, um rechnerisch eine Korrektur eines temperaturbedingten Fehlers der Konstantstromquelle 60 vorzunehmen. Die Konstantstromquelle 60 ist ausgestaltet, einen konstante Stromstärke 66 auszugeben. In einem Beispiel ist die Konstantstromquelle selbst hardwaremäßig ausgeführt, dass ein eingestellter Strom temperaturunabhängig ist und eine Temperaturkompensation in der Konstantstromquelle selbst erfolgt.

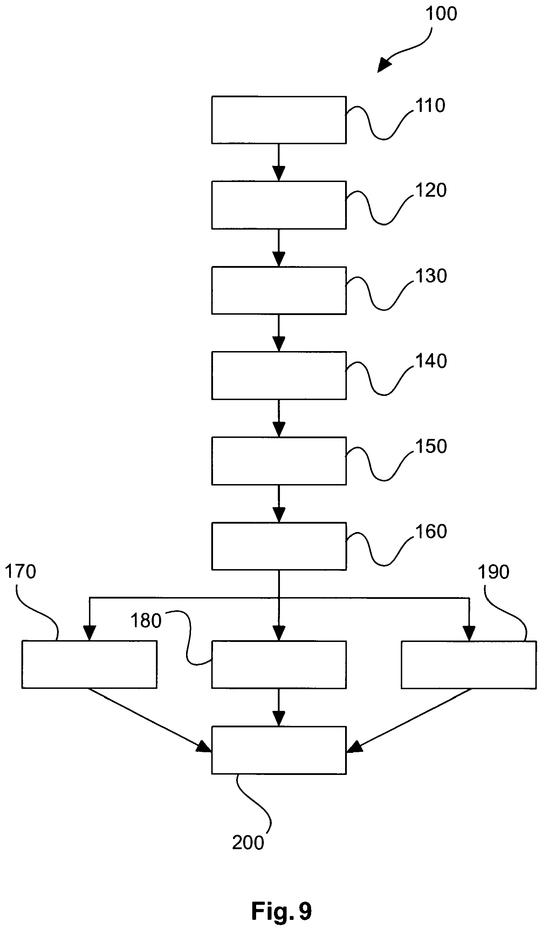

Fig. 9 zeigt ein Verfahren 100 gemäß einem Ausführungsbeispiel der Erfindung zum Ermitteln einer Leckagerate eines Gases in einem Gehäuse zur Aufnahme eines elektrischen Gerätes zur Verwendung im Weltraum. In einem ersten Schritt 110 wird ein Drucksensor im Gehäuse vorgesehen. In einem folgenden Schritt 120 wird ein Temperatursensor vorgesehen. Weiterhin wird in einem Schritt 130 eine Zeitmessvorrichtung vorgesehen. Um wärmebedingte oder temperaturbedingte Fehler des Drucksensors zu berücksichtigen wird in einem Schritt 140 ein Temperaturkoeffizient des Drucksensors ermittelt. Um weiterhin wärmebedingte oder temperaturbedingte Fehler der Konstantstromquelle in der Ermittlung einer Leckagerate zu berücksichtigen, wird ein Temperaturkoeffizient der Konstantstromquelle in einem Schritt 150 ermittelt. Danach erfolgt im Schritt 160 ein Verschließen des Gehäuses. Danach erfolgen ein Detektieren einer Druckveränderung mit dem Drucksensor im Schritt 170, ein Detektieren einer korrespondierenden Temperaturveränderung mit dem Temperatursensor im Schritt 180 sowie eine Ermittlung der korrespondierenden Messzeitpunkte mit der Zeitmessvorrichtung im Schritt 190. Im letzten Schritt 200 erfolgt ein Ermitteln der Leckagerate des Gehäuses durch eine Auswerteeinheit basierend auf der Druckveränderung, der Temperaturveränderung, dem Temperaturkoeffizienten des Drucksensors, dem Temperaturkoeffizienten der Konstantstromquelle sowie der ermittelten Messzeitpunkte. Die Berücksichtigung der Temperaturkoeffizienten des Drucksensors und/oder des Temperaturkoeffizienten der Konstantstromquelle ist optional und kann einer Verbesserung der Genauigkeit der Berechnung der Leckagerate dienen.

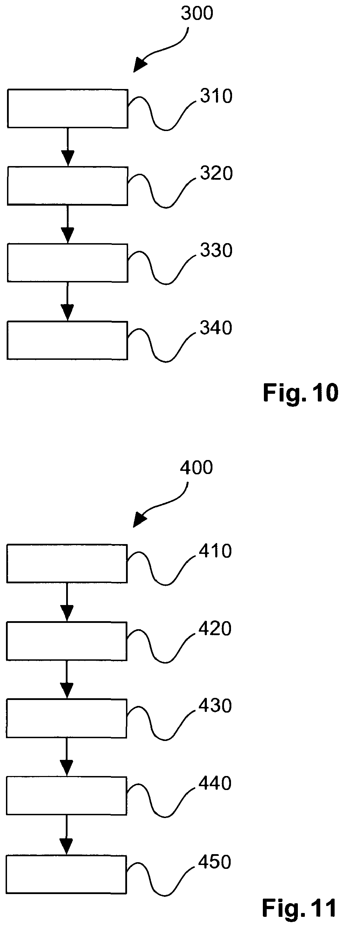

Fig. 10 zeigt beispielhaft ein Verfahren 300 gemäß einem Ausführungsbeispiel der Erfindung zum Ermitteln eines Temperaturkoeffizienten eines Drucksensors. Das Verfahren 300 beinhaltet zunächst im Schritt 310 ein Einstellen eines zeitlich konstanten Druckes in einem. Im Schritt 320 wird eine Temperatur im Gehäuse verändert. Danach wird im Schritt 330 eine Ausgangsspannungsänderung am Drucksensor detektiert. Danach erfolgt im Schritt 340 ein Berechnen des Temperaturkoeffizienten des Drucksensors basierend auf der Ausgangsspannungsänderung und der korrespondierenden Temperatur im Gehäuse. In einem Beispiel wird eine Druck-Temperatur-Kennlinie ermittelt, die eine gegenseitige Abhängigkeit von Temperatur und Druck im Gehäuse darstellt.

Fig. 11 zeigt beispielhaft ein Verfahren 400 gemäß einem Ausführungsbeispiel der Erfindung zur Ermittlung eines Temperaturkoeffizienten einer Konstantstromquelle. Das Verfahren 400 beinhaltet im Schritt 410 ein Vorsehen eines Stromquellentemperatursensors an der Konstantstromquelle derart, dass der Stromquellentemperatursensor eine Temperatur der Konstantstromquelle messen kann. Danach erfolgt im Schritt 420 ein Vorsehen einer Strommessvorrichtung zur Messung einer Stromstärke der Konstantstromquelle. Dies kann beispielsweise ein herkömmlicher Strommesser oder Amperemeter sein, der in Reihe mit der Konstantstromquelle geschaltet werden kann. Im Schritt 430 erfolgt ein Verändern einer Temperatur der Konstantstromquelle. Dies kann beispielsweise dadurch erfolgen, dass eine Aufnahmevorrichtung 34 (siehe Fig. 1) für ein Gerät gezielt temperiert wird und somit auch eine Temperierung der Konstantstromquelle erfolgt. Im Schritt 440 wird eine sich aus der veränderten Temperatur ergebende Veränderung der Stromstärke der Konstantstromquelle mit der Strommessvorrichtung detektiert. Aus den jeweiligen gemessenen Temperaturen und Stromstärken wird im Schritt 450 ein Temperaturkoeffizient der Konstantstromquelle basierend auf der Veränderung der Temperatur und auf der Veränderung der Stromstärke ermittelt.

Ergänzend sei darauf hingewiesen, dass "aufweisend" bzw. "umfassend" keine anderen Elemente oder Schritte ausschließen und dass "eine" bzw. "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Bezugszeichenliste

- 2: Gehäusekomponente
- 4: Sensorelement
- 6: Kontaktelement
- 8: Innenvolumen
- 10: Schaltung
- 12: Drucksensitive Widerstände
- 14: Leiterplatte
- R1,R2,R3: Widerstände
- 20: Messanordnung
- 22: Gehäuse
- 24: Gerät
- 26: Drucksensor
- 28: Temperatursensor
- 30: Kammer
- 32: Kammerdrucksensor
- 34: Aufnahmevorrichtung
- 36: Temperatureinstellvorrichtung
- 38: Manuelle Einstellvorrichtung
- 40: Druckeinstellvorrichtungen
- 42: Ausgangssignal des Drucksensors
- 44: Ausgangssignal des Temperatursensors
- 46: Ausgangssignal des Kammerdrucksensors
- 48: Auswerteeinheit
- 50: Messzeitpunkte
- 52: Leckagerate
- 54: Zeitmessvorrichtung
- 60: Konstantstromquelle
- 62: Stromquellentemperatursensor
- 64: Ausgangssignal des Stromquellentemperatursensors
- 66: Stromstärke der Konstantstromquelle

## Patentansprüche

1. Messanordnung (20) zur Ermittlung einer Leckagerate eines Gehäuses (22) für die Aufnahme eines Gerätes (24) für Satelliten und Weltraumanwendungen, aufweisend:
- ein Gehäuse (22);
- einen Drucksensor (26), der im Gehäuse (22) angeordnet ist und geeignet ist, einen Druck innerhalb des Gehäuses (22) zu detektieren;
- einen Temperatursensor (28), der geeignet ist, eine Temperatur innerhalb des Gehäuses (22) zu detektieren;
- eine Zeitmessvorrichtung (54), die geeignet ist, Messzeitpunkte (50) der Detektion des Druckes und/oder der Detektion der Temperatur zu ermitteln;
- eine Auswerteeinheit (48), die ausgestaltet ist, basierend auf Ausgangssignalen (42, 44) des Drucksensors (26) und des Temperatursensors (28) sowie der Messzeitpunkte (50) eine Leckagerate (52) zu ermitteln;
- wobei die Messanordnung weiterhin aufweist:
- eine hermetisch abdichtbare Kammer (30) mit einer Druckeinstellvorrichtung (40), die ausgestaltet ist, einen Kammerinnendruck einzustellen;
- wobei das Gehäuse (22) mit dem Drucksensor (26) und Temperatursensor (28) in einem Innenbereich der Kammer angeordnet ist;
- wobei die Kammer (30) eine Aufnahmevorrichtung (34) für das Gehäuse (22) aufweist; **dadurch gekennzeichnet**, dassdie Kammer (30) weiterhin eine Temperatureinstellvorrichtung (36) aufweist, die ausgeführt ist, die Temperatur innerhalb des Gehäuses (22) einzustellen.

2. Messanordnung (20) gemäß Anspruch 1, wobei die Kammer weiterhin einen Kammerdrucksensor (32) zur Detektion des Kammerinnendrucks aufweist;
wobei der Kammerdrucksensor (32) konfiguriert ist, ein Referenzsignal für eine Einstellung des Ausgangssignals (42) des Drucksensors (26) anzugeben.

3. Messanordnung (20) gemäß einem der vorhergehenden Ansprüche, wobei der Drucksensor (26) eine Konstantstromquelle (60) aufweist, die temperaturkompensiert ist.

4. Messanordnung (20) gemäß Anspruch 3, wobei die Konstantstromquelle einen Stromquellentemperatursensor (62) zum Detektieren einer Temperatur der Konstantstromquelle (60) aufweist,
wobei die Auswerteeinheit (48) ausgeführt ist, eine temperaturbedingte Veränderung eines Stromes (66) der Konstantstromquelle (60) basierend auf einem Ausgangssignal (64) des Stromquellentemperatursensors (62) zu kompensieren.

5. Messanordnung (20) gemäß einem der vorhergehenden Ansprüche, wobei der Temperatursensor (28) im Gehäuse (22) angeordnet ist.

## Claims

1. Measuring arrangement (20) for determining a leak rate of a housing (22) for receiving a device (24) for satellites and space applications, comprising:
- a housing (22);
- a pressure sensor (26) that is arranged in the housing (22) and that is suitable to detect a pressure within the housing (22);
- a temperature sensor (28) that is suitable to detect a temperature within the housing (22);
- a time measuring arrangement (54) that is suitable to determine a time of measurement (50) of detection of the pressure and/or of detection of the temperature;
- an evaluating unit (48) that is arranged to determine a leak rate (52) based on output signals (42, 44) of the pressure sensor (26) and of the temperature sensor (28) as well as the time of measurement (50);
- wherein the measuring arrangement furthermore comprises:
- a hermetically sealable chamber (30) with a pressure adjusting device (40) that is arranged to adjust an interior pressure of the chamber;
- wherein the housing (22) together with the pressure sensor (26) and the temperature sensor (28) are arranged in an inner region of the chamber;
- wherein the chamber (30) comprises a receiving device (34) for the housing (22);
**characterized in that** the chamber (30) furthermore comprises a temperature adjusting device (36) that is configured to adjust a temperature within the housing (22).

2. Measuring arrangement (20) according to claim 1, wherein the chamber furthermore comprises a chamber pressure sensor (32) for detecting the inner pressure of the chamber;
wherein the chamber pressure sensor (32) is configured to indicate a reference signal for adjusting the output signal (42) of the pressure sensor (26).

3. Measuring arrangement (20) according to one of the preceding claims, wherein the pressure sensor (26) comprises a constant current source (60) that is temperature compensated.

4. Measuring arrangement (20) according to claim 3, wherein the constant current source comprises a current source temperature sensor (62) for detecting a temperature of the constant current source (60),
wherein the evaluating unit (48) is configured to compensate a temperature-caused change of a current (66) of the constant current source (60) based on an output signal (64) of the current source temperature sensor (62).

5. Measuring arrangement (20) according to one of the preceding claims, wherein the temperature sensor (28) is arranged in the housing (22).

## Revendications

1. Agencement de mesure (20) pour déterminer un taux de fuite d'un boîtier (22) pour la réception d'un appareil (24) pour satellites et applications spatiales, présentant :
- un boîtier (22) ;
- un capteur de pression (26), qui est disposé dans le boîtier (22) et est adapté pour détecter une pression à l'intérieur du boîtier (22) ;
- un capteur de température (28), qui est adapté pour détecter une température à l'intérieur du boîtier (22) ;
- un dispositif de mesure du temps (54), qui est adapté pour déterminer des moments de mesure (50) de détection de la pression et/ou de détection de la température ;
- une unité de traitement (48), qui est configurée pour déterminer un taux de fuite (52) en se basant sur des signaux de sortie (42, 44) du capteur de pression (26) et du capteur de température (28) ainsi que des moments de mesure (50) ;
- dans lequel l'agencement de mesure présente en outre :
- une chambre étanchéifiable de manière hermétique (30) avec un dispositif de réglage de pression (40), qui est configuré pour régler une pression intérieure de la chambre ;
- dans lequel le boîtier (22) est disposé avec le capteur de pression (26) et le capteur de température (28) dans une zone intérieure de la chambre ;
- dans lequel la chambre (30) présente un dispositif de réception (34) pour le boîtier (22) ;
**caractérisé en ce que** la chambre (30) présente un outre un dispositif de réglage de température (36) qui est configuré pour régler la température à l'intérieur du boîtier (22).

2. Agencement de mesure (20) selon la revendication 1, dans lequel la chambre présente en outre un capteur de pression de chambre (32) pour la détection de la pression intérieure de la chambre ;
dans lequel le capteur de pression de chambre (32) est configuré pour signaler un signal de référence pour un réglage du signal de sortie (42) du capteur de pression (26).

3. Agencement de mesure (20) selon une des revendications précédentes, dans lequel le capteur de pression (26) présente une source de courant constant (60) qui est compensée par la température. 1

4. Agencement de mesure (20) selon la revendication 3, dans lequel la source de courant constant présente un capteur de température de source de courant (62) pour détecter une température de la source de courant constant (60), dans lequel l'unité de traitement (48) est configurée pour compenser une variation d'un courant (66) de la source de courant constant (60) causée par la température en se basant sur un signal de sortie (64) du capteur de température de source de courant (62).

5. Agencement de mesure (20) selon une des revendications précédentes, dans lequel le capteur de température (28) est disposé dans le boîtier (22).
